# EUROPEAN PATENT SPECIFICATION

(11) **EP 2 863 202 B1**
(45) Date of publication and mention of the grant of the patent: **15.03.2017**
(21) Application number: 14189405.5
(22) Date of filing: 17.10.2014
(51) Int. Cl.: G09B 9/00, G09B 19/00, G09B 23/28, G01M 99/00, G09B 23/00

(54) **Anthropomorphic model for durability tests on vehicle seats during the entry and exit process**
Anthropomorphes Modell für Beständigkeitsprüfungen an Fahrzeugsitzen während des Ein- und Ausstiegsvorgangs
Modèle anthropomorphe pour des tests de durabilité sur des sièges de véhicule pendant le processus d'entrée et de sortie

(30) Priority: 18.10.2013 ES 201301001
(43) Date of publication of application: 22.04.2015
(73) Proprietor: Fundación para la Promoción de la Innov., Inv. y Desarrollo Tecnológico en la industria de Automoción de Galicia, 36400 Pontevedra (ES)
(72) Inventor: Ruiz Peláez, Berta, 36400 Pontevendra (ES); Rivero Graña, Eduardo, 36400 Pontevedra (ES); Gónzalez Figueroa, Damián, 36400 Pontevedra (ES); Álvarez de Francisco, Isabel, 36400 Pontevedra (ES); Martínez López, Iris, 36400 Pontevedra (ES)
(74) Representative: Carvajal y Urquijo, Isabel

(56) References cited:
- EP-A2- 2 219 019
- DE-U1-202005 020 957
- JP-A- S60 140 137
- US-A- 3 895 451

## Description

### Field of the Invention

The initial objective of the present invention is its application in the field of durability testing for motor vehicle seats.

### Background of the invention

Anthropomorphic model systems are commonly used as testing means for motor vehicle seats. These models are used to conduct durability tests on the vehicle seats in order to verify their compliance with the requirements specified by the manufacturer regarding the useful life of the seat. These models simulate the part of the human body responsible for wearing out the seat during the process of entering/exiting the vehicle and are mounted on robots, which repeatedly reproduce the trajectory and load involved in this movement.

Nowadays, due to the increase in the importance attached to quality as perceived by the user, the requirements and demands placed on the interior components are increasingly high. This is why it is necessary to update the test procedures to make them more and more realistic, in such a way that they will become better tools for detecting actual failures of the components rapidly in the laboratory. The update of these procedures goes hand-in-hand with an advancement in the development of new testing means, and the aim of the present invention is precisely to meet a particular need.

The dummies used in the vehicle entrance/exiting tests are based on standards defined by the SAE (Society of Automotive Engineers). Sociedad de Ingenieros de Automoción). They are a three-dimensional representation of an adult male. The center of gravity is located so as to exercise a seat penetration equivalent to that of a person weighting 77 kg, corresponding to the 50th percentile for adult males.

These standards define the point H of the dummies, point of reference in many entry/exit testing procedures. This point H corresponds to the center of the hips, representing the pivoting center between the torso and the thighs.

These dummies are made with reinforced plastic, a rigid material that does not match the compressibility of the human body. For this reason, most of the standards defining the entry/exit tests specify that the model must be lined with polyurethane foam having a thickness that varies between 8 and 12 mm.

One of the most reliable points of the models currently used is the three-dimensional dummy model according to SAE J826, corresponding to a 50th percentile adult male. The dummy "OSCAR" HPM SAEJ 826 is an anthropomorphic model taken routinely as a reference in the automotive industry, which is widely used in the models and complies with the anthropometric parameters considered as a reference.

Moreover, the main deficiency that has been found in the automotive models that are currently used in seat validations is the lack of materials simulating the compressibility of human flesh. This is reflected in the need to cover the models with more compressible materials such as foam, although the outcome reached is not considered to be sufficiently representative of reality. For this reason, the present model is made with hard materials (inside the model) and with silicones (outside of the model) that enable a better simulation of the human body.

Unlike the dummies used in automotive tests, the entry/exit anthropomorphic model consists of two distinct parts:
- a hard structure with a triple function: simulating the wear caused by the bones during the entry/exit process, serving as a support for the silicone parts and facilitating a junction point with the robot that will perform the seat durability test, repeatedly reproducing the trajectory and the load involved in this process.
- a soft part to simulate the wear caused by human flesh.

Currently, there are many models that respond to this same scheme, but whose design is different and is aimed to cover other objectives:
- In the patent EP1033565-B1 a full-body model is described, which placed in a vehicle seat can help to evaluate its durability, as well as the safety and comfort of the vehicle.
- The models described in the patent document WO2008080852-A1 and WO2008080790-A1 serve to evaluate the comfort of vehicle seats.
- Models such as those described in the patent documents EP1033563-A2, US6009750-A and US6116102-A simulate the response to human vibration on seats.
- Patent US5628230 describes an anthropomorphic model whose function is to evaluate the friction that human flesh undergoes against seat fabric.
- The patent document US5821415-A discloses a model used to simulate a person sitting on a vehicle seat with the objective of evaluating the durability and comfort of the seat.
- The patent document WO2003031927 discloses a testing method in which a model is used to assess the dynamic comfort of the seat cushion.
- The patent document EP2219019-A2 discloses an anthropomorphic model for testing the design of a seat, in particular to automatically determine the distance between the passenger's head and the headrest.
- Utility model DE202005020957-U1 discloses an anthropomorphic model, with two legs and two buttocks made of gel-body covering commercial plastic bones, in particular a dummy that can be used in vehicle seats during investigations of component life for simulating realistic load distributions.
- Patent document JPS60140137-A discloses a model for testing durability of a seat during getting on and off. The model includes one single leg and two buttocks connected to a mechanical system formed by three air cylinders.

There are also testing methods that describe a test model to be coupled to a robot:
- The patent US8364435 discloses a testing method with a robot and coupled model, with the aim of improving the design of the cushion, the backrest and the headrest.
- Patent EP1033564-B1 discloses a testing method and a device for simulating the process for entering/exiting a vehicle. The model described is a complex and articulated model, while the objective of the present invention is a model as simple as possible, able to reproduce the actual aging produced by a person on the cushion of the vehicle seat (which is the most damaged area during this process).

### Description of the invention

The present invention proposes a model according to claim 1 that makes it possible to simulate the wear produced by parts of the human body that affect the aging of the cushion of a seat positioned on the driver's side of a car, exposed to the process of entering/exiting a vehicle.

The anthropomorphic model according to claim 1 for durability tests on vehicle seats during the entry and exit process, comprises:
- a soft external structure attached to a rigid internal structure to simulate the wear produced on the seat by human flesh during the maneuver of the robot, said soft external structure comprising two buttocks and at one single leg made of silicone (preferably M4511 silicone);
- a rigid internal structure comprising:
   - a metal plate; preferably made of steel;
   - a plurality of steel cylinders with hemispherical heads made of resin, these cylinders being located inside the silicone and attached at their ends to the metal plate by means of threaded fasteners and acorn nuts;
   - a junction point for coupling the model to a robot in charge of repetitively reproducing a human movement when entering/exiting a vehicle.

The rigid internal structure of the model is provided preferentially with a metal bar and threaded holes all along the perimeter of the metal plate for attaching pants or fabric with which the model is covered during the test.

The solution developed introduces as a novelty its implementation in durability tests during the maneuver for entering/exiting a private car, proposing a simple and specific model for reproducing the actual aging the cushion of a seat undergoes during this process.

The model makes it possible to reproduce the trajectory, the load and friction produced by a 50th percentile man during the maneuver for entering/exiting a vehicle of the private car type.

This testing tool is designed to be coupled to the arm of a robot that is able to reproduce the trajectory and the load involved in the entry/exit process.

### Brief description of the drawings

Next, for a better understanding of the invention, a series of drawings will be described very briefly. Said drawings are expressly related to an embodiment of said invention, which is presented as a non-limiting example thereof.

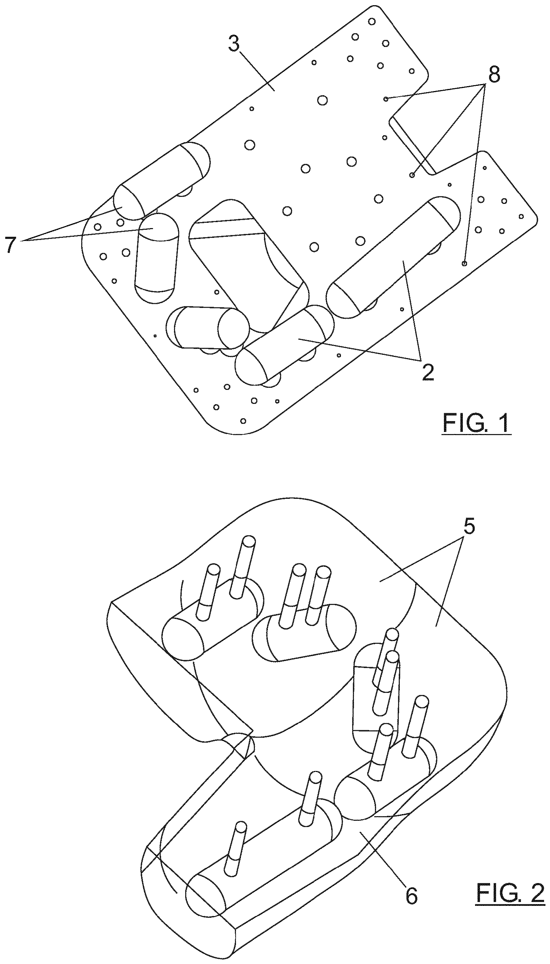

Figure 1 shows a view of the internal metal structure of the model.
Figure 2 shows the external silicone structure.

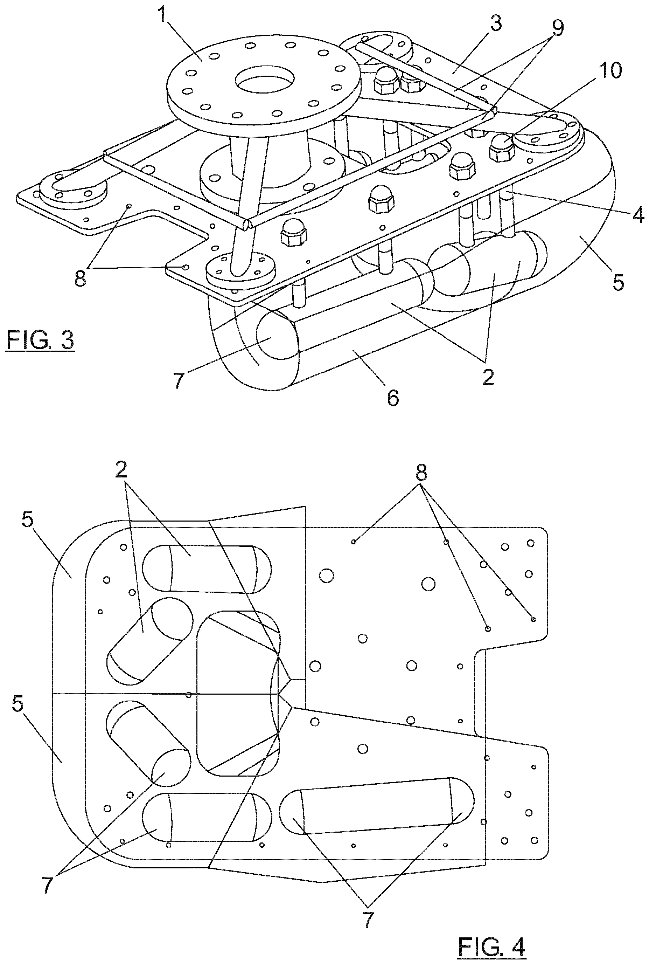

Figure 3 represents a perspective view of the entire model.
Figure 4 represents a bottom view of the entire model.

### Detailed description of the invention

The preferred embodiment of the entry/exit anthropomorphic model, object of the present invention requires the integration of two parts: one internal part that performs the wear function caused by the bony human structure, during the maneuver for entering/exiting a vehicle. a soft external part that performs the wear function produced by human flesh during said maneuver. The model is specifically designed to reproduce only the maneuver for entering/exiting a car, reproducing its trajectory and stress, which is why the right leg has been removed. This makes it possible, in a laboratory and with the help of a robot, to obtain the actual aging of a seat because of said maneuver.

The internal structure of the model, made of steel, is not intended to simulate the shape of the human skeleton, but rather to reproduce the aging effects that the latter causes during the process of entering/exiting the vehicle.

The structure has a metal plate 3 where the cylinders 2 are attached by means of threaded fasteners 4 thereof, with acorn nuts 10 and a junction point 1 for joining to the robot. The cylinders are closed with resin hemispheres 7 and the metal plate 3 has threaded holes 8 all along its perimeter to facilitate the attachment of the pants or fabric with which the model is covered during the test. With the same purpose, the model has a metal bar 9.

In regard to the external structure, the part corresponding to the two buttocks 5 and the left leg 6 (the model has one single leg because the tests have shown that the other leg does not affect the outcome of the vehicle entry/exit test, and because by eliminating it, the actual trajectory of the process can be better reproduced; that is why the present model does not have a right leg, nor its femur), is made of silicone, preferably M4511 silicone, that provides an excellent ratio between the hardness of human flesh and the friction resistance requirements imposed by a long durability test.

## Claims

1. An anthropomorphic model for durability tests on vehicle seats during the entry and exit process, comprising:
- a rigid internal structure comprising:
• a metal plate (3);
• a junction point (1) for coupling the model to a robot in charge of repetitively reproducing a human movement for entering/exiting a vehicle;
- a soft external structure attached to the rigid internal structure to simulate the wear produced on the seat by human flesh during the maneuver of the robot,
**characterized in that** the soft external structure comprises two buttocks (5) and one single leg (6) made of silicone;
and **in that** the rigid internal structure further comprises a plurality of steel cylinders (2) with hemispherical heads (7) made of resin, the steel cylinders (2) being located inside the silicone and attached at their ends to the metal plate (3) by means of threaded fasteners (4) and acorn nuts (10).

2. The anthropomorphic model according to claim 1, wherein the soft external structure is manufactured in silicone M4511.

3. The anthropomorphic model according to any of the previous claims, wherein the metal plate (3) is manufactured out of steel.

4. The anthropomorphic model according to any of the previous claims, wherein the rigid internal structure of the model is provided with a metal bar (9) and threaded holes (8) all along the perimeter of the metal plate (3) for attaching a fabric with which the model is covered during the test.

## Patentansprüche

1. Anthropomorphes Modell für Haltbarkeitstests an Fahrzeugsitzen während Einstieg- und Ausstiegsvorgängen umfassend:
- eine starre interne Struktur umfassend:
• eine Metallplatte (3);
• eine Verbindungsstelle (1) zum Verbinden des Modells mit einem Roboter, der damit beauftragt ist, eine menschliche Bewegung zum Einsteigen/Aussteigen in/aus ein(em) Fahrzeug wiederholt nachzubilden;
- eine weiche äußere Struktur, die an der starren inneren Struktur befestigt ist, um den Verschleiß, der auf dem Sitz durch menschliches Fleisch produziert wird, während des Manövers des Roboters zu simulieren,
**dadurch gekennzeichnet, dass** die weiche äußere Struktur zwei Gesäßbacken (5) und ein einzelnes Bein (6), die aus Silikon hergestellt sind, umfasst;
und dass die starre innere Struktur ferner mehrere Stahlzylinder (2) mit halbkugelförmigen Köpfen (7), die aus Harz hergestellt sind, umfasst, wobei die Stahlzylinder (2) innerhalb des Silikons liegen und an deren Enden an der Metallplatte (3) durch Gewindebefestigungselemente (4) und Hutmuttern (10) befestigt sind.

2. Anthropomorphes Modell nach Anspruch 1, wobei die weiche äußere Struktur aus M4511-Silikon hergestellt ist.

3. Anthropomorphes Modell nach einem der vorherigen Ansprüche, wobei die Metallplatte (3) aus Stahl hergestellt ist.

4. Anthropomorphes Modell nach einem der vorherigen Ansprüche, wobei die starre innere Struktur des Modells mit einer Metallstange (9) und Gewindebohrungen (8) versehen ist, die sich allesamt entlang des Umfangs der Metallplatte (3) zum Befestigen eines Stoffs befinden, mit welchem das Modell während des Tests bedeckt ist.

## Revendications

1. Modèle anthropomorphe pour des essais de durabilité sur des sièges de véhicule lors du processus d'entrée et de sortie, comprenant :
- une structure interne rigide comprenant :
• une plaque de métal (3) ;
• un point de liaison (1) pour coupler le modèle à un robot chargé de reproduire de manière répétée un mouvement humain pour entrer/sortir d'un véhicule ;
- une structure externe molle fixée à la structure interne rigide pour simuler l'usure créée sur le siège par la chair humaine lors de la manoeuvre du robot,
**caractérisé en ce que** la structure externe molle comprend deux fesses (5) et une seule jambe (6) en silicone ;
et **en ce que** la structure interne rigide comprend en outre une pluralité de cylindres en acier (2) avec des têtes hémisphériques (7) en résine, les cylindres en acier (2) étant situés dans le silicone et fixés à leurs extrémités à la plaque de métal (3) au moyen d'éléments de serrage filetés (4) et d'écrous borgnes (10).

2. Modèle anthropomorphe selon la revendication 1, dans lequel la structure externe molle est fabriquée en silicone M4511.

3. Modèle anthropomorphe selon l'une quelconque des revendications précédentes, dans lequel la plaque de métal (3) est fabriquée en acier.

4. Modèle anthropomorphe selon l'une quelconque des revendications précédentes, dans lequel la structure interne rigide du modèle est pourvue d'une barre de métal (9) et d'orifices filetés (8) tout le long du périmètre de la plaque de métal (3) pour fixer un tissu avec lequel le modèle est couvert lors de l'essai.
